# EUROPÄISCHE PATENTSCHRIFT

(11) **EP 0 741 514 B1**
(45) Veröffentlichungstag und Bekanntmachung des Hinweises auf die Patenterteilung: **24.09.1997**
(21) Anmeldenummer: 95904474.4
(22) Anmeldetag: 15.12.1994
(51) Int. Cl.: A01K 1/12

(54) **MELKSTAND**
MILKING STALL
SALLE DE TRAITE

(30) Priorität: 22.02.1994 DE 4405542
(43) Veröffentlichungstag der Anmeldung: 13.11.1996
(73) Patentinhaber: Westfalia Separator AG, 59302 Oelde (DE)
(72) Erfinder: KÖSTER, Ludger, Lombard, IL 60148 (US)
(86) Internationale Anmeldenummer: EP9404158
(87) Internationale Veröffentlichungsnummer: WO9522247

(56) Entgegenhaltungen:
- EP-A- 0 549 324
- FR-A- 2 565 778
- US-A- 4 951 608
- US-A- 5 156 108
- US-A- 5 285 746

## Beschreibung

Die Erfindung bezieht sich auf einen Melkstand mit den Merkmalen nach dem Oberbegriff des Patentanspruches 1.

Ein derartiger Melkstand ist aus der US 4,951,608 bekannt. Dabei ermöglicht ein vertikal bewegliches Sperrelement ebenfalls den gleichzeitigen Austritt aller Tiere aus dem Melkstand, doch können sich die Tiere an dem glattflächigen Sperrelement bewegen und kleinere Tiere dadurch wegdrängen. Es besteht auch die Möglichkeit, daß die Tiere in einer für den Melkvorgang ungünstigen Position stehen bleiben.

Aus der US 5,156,108 ist ein Melkstand bekannt, bei dem das brustseitige Sperrelement horizontal verschiebbar ist, so daß vor der Belegung der Melkplätze ein breiter Zugang geschaffen werden kann. Nachdem die Tiere ihre Standplätze eingenommen haben, wird durch Bewegung des brustseitigen Sperrelementes in Richtung auf die rückseitige Begrenzung die optimale Melkposition der Tiere bewirkt. Obwohl durch den breiteren Zugang die Belegung der Standplätze erleichtert wird, kann die unregelmäßige Struktur, die durch die Wellenrohre an beiden Seiten des Zuganges gebildet werden, die Belegung der Standplätze verzögern. Außerdem erfordert die Verschiebbarkeit des brustseitigen Sperrelementes entsprechend dem gewählten Verschiebeweg mehr Platz als konventionelle Melkstände.

Die FR 25 65 778 A1 zeigt ebenfalls einen Melkstand mit einem Sperrelement ohne Positionierungsmittel für die zu melkenden Tiere. Um den Austritt der Tiere zu ermöglichen, muß das Sperrelement auf einer Kreisbahn in eine Position oberhalb der Tiere verschwenkt werden. Der erforderliche Schwenkbereich benötigt einen entsprechend großen Platzbedarf. Da keine Positionierungsmittel vorgesehen sind, ergibt sich das Problem der Behinderung der Tiere beim Zutritt überhaupt nicht. Andererseits ist die fehlende Positionierung aber nachteilig für das Erreichen einer optimalen Melkposition der Tiere.

Der Erfindung liegt die Aufgabe zugrunde, den gattungsgemäßen Melkstand so auszubilden, daß eine behinderungsfreie Belegung des Melkstandes und eine optimale Positionierung der Tiere erzielt wird.

Diese Aufgabe wird durch die Merkmale des kennzeichnenden Teils des Patentanspruches 1 gelöst.

In der überwiegend vertikalen Position des ersten Wellenrohres bietet sich für die in den Melkstand eintretenden Tiere ein breiter Zugang mit glattflächiger Begrenzung an, die ein Einklemmen der eintretenden Tiere verhindert. Nach dem Eintrieb wird das erste Wellenrohr durch Drehen des Sperrelementes in die überwiegend horizontale Position gebracht, wodurch die Tiere in eine für das Melken günstige Position gebracht und dort gehalten werden.

In einer vorteilhaften Ausgestaltung ist das Sperrelement mit einem zweiten Wellenrohr versehen, das zum ersten Wellenrohr versetzt angeordnet und durch weiteres Verdrehen des Sperrelementes in eine horizontale Position bringbar ist, wobei die radiale Erstreckung des zweiten Wellenrohres größer ist als die des ersten Wellenrohres. Mit dem zweiten Wellenrohr können die Tiere weiter in Richtung auf die rückseitige Begrenzung bewegt werden, um sie in noch günstigere Melkposition zu bringen. Bei einer Gruppe kleinerer Tiere ermöglicht das zweite Wellenrohr eine bessere Positionierung im Brustbereich der Tiere.

Das erfindungsgemäße Sperrelement kann in vorteilhafter Weise an beiden Endseiten in Konsolen gelagert sein und durch axial bewegliche Kolbenstangen betätigt werden. Derartige Kolbenstangen können beispielsweise hydraulisch, pneumatisch oder elektrisch bewegt werden.

Die verschiedenen Positionen des Sperrelementes sind dadurch erzielbar, daß die Konsolen mit Führungsbahnen für das Sperrelement versehen sind, die bei Betätigung der Kolbenstangen eine vertikale Bewegung des Sperrelementes bewirken und in der oberen und unteren Position eine Drehung des Sperrelementes erzwingen, durch die die Wellenrohre in eine überwiegend horizontale Lage bewegt werden.

Ausführungsbeispiele der Erfindung sind in der Zeichnung dargestellt und werden nachstehend näher erläutert. Es zeigt
- Fig. 1: einen Querschnitt durch den Melkstand mit dem Sperrelement in der Zutrittsposition,
- Fig. 2: die Draufsicht "W" gemäß Fig. 1,
- Fig. 3: einen Querschnitt durch den Melkstand mit dem ersten Wellenrohr in Melkposition,
- Fig. 4: die Draufsicht "X" gemäß Fig. 3,
- Fig. 5: einen Querschnitt durch den Melkstand mit dem zweiten Wellenrohr in Melkposition,
- Fig. 6: die Draufsicht "Y" gemäß Fig. 5,
- Fig. 7: einen Querschnitt durch den Melkstand mit dem Sperrelement in der Austrittsposition,
- Fig. 8: die Draufsicht "Z" gemäß Fig. 7.

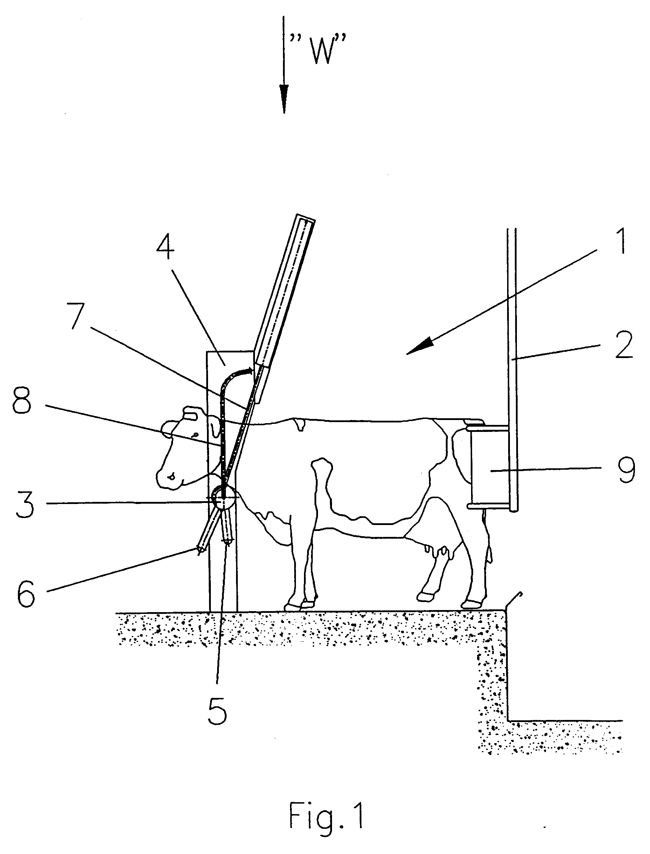

Mit 1 ist in der **Fig. 1** der Melkstand bezeichnet, der mit einer rückseitigen Begrenzung 2 und einem brustseitigen Sperrelement 3 versehen ist, das drehbar und vertikal bewegbar in Konsolen 4 gelagert ist. Das Sperrelement 3 ist mit einem ersten Wellenrohr 5 und einem zweiten Wellenrohr 6 versehen, die zueinander versetzt angeordnet sind und eine unterschiedliche radiale Erstreckung besitzen. Die Dreh- und Hubbewegung des Sperrelementes 3 wird durch eine axial bewegliche Kolbenstange 7 in Verbindung mit einer entsprechend ausgebildeten Führungsbahn 8 in der Konsole 4 erzeugt. Die rückseitige Begrenzung 2 ist mit Positionierungselementen 9 versehen.

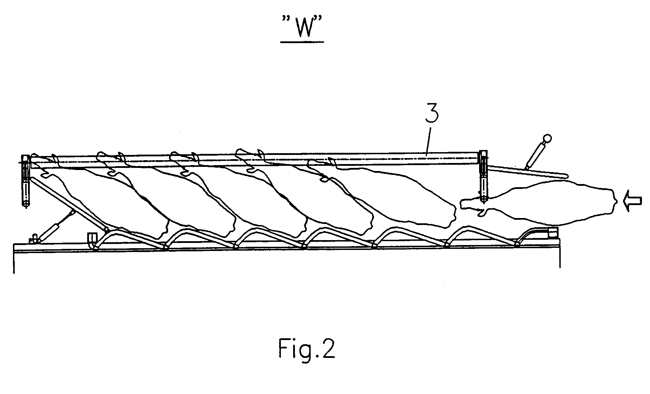

Die Wellenrohre 5 und 6 befinden sich beim Eintrieb der Tiere in einer überwiegend vertikalen Position, wodurch sich ein breiter Zugang und brustseitig eine glattflächige Begrenzung ergibt. Aus der **Fig. 2** ist ersichtlich, daß sich bei dieser Stellung des Sperrelementes 3 ein großzügiger, behinderungsfreier Zugang ergibt, der ein schnelles Belegen der Standplätze ermöglicht.

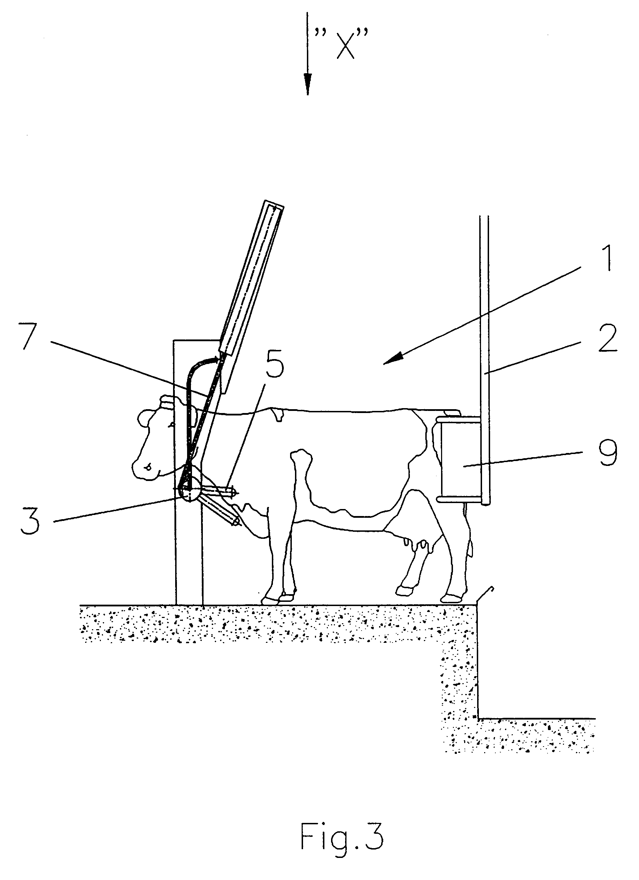

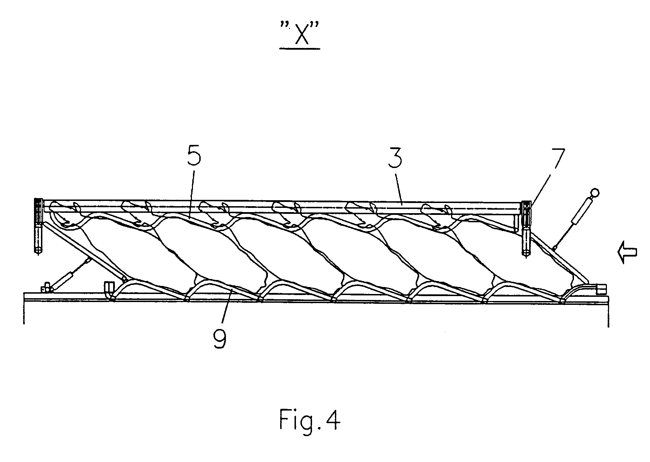

Die **Fig. 3** zeigt das erste Wellenrohr 5 in waagerechter Position, in die es durch Verdrehen des Sperrelementes 3 mittels Kolbenstange 7 bewegt wurde. Die Tiere werden dabei über das erste Wellenrohr 5 in Verbindung mit den Positionierungselementen 9 in eine für das Melken günstige Position gebracht, wie dies aus der **Fig. 4** ersichtlich ist.

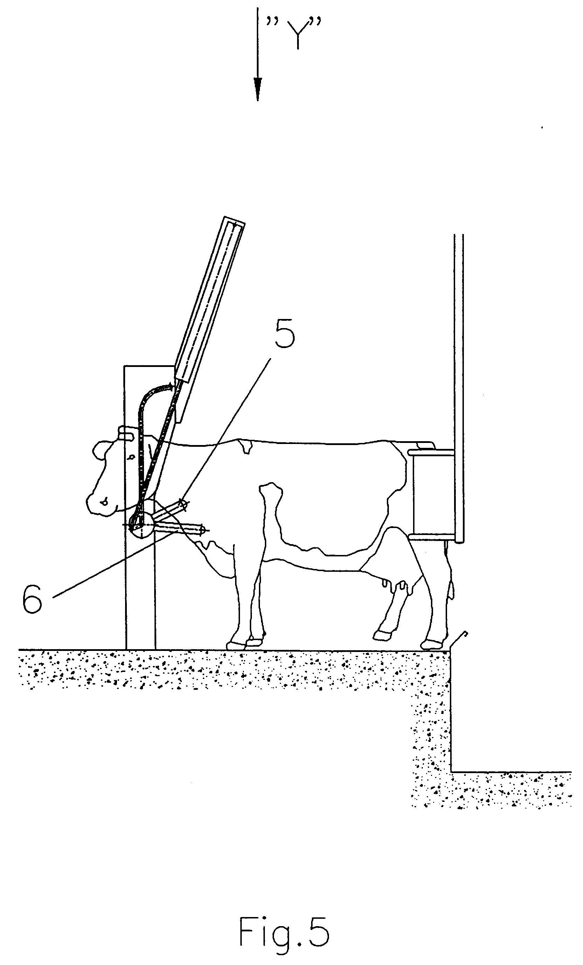

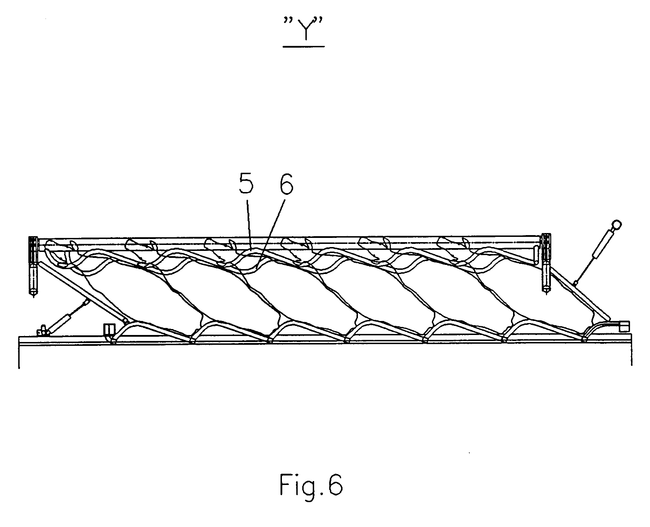

Eine Optimierung der Melkposition bzw. eine Anpassung an Gruppen mit kleineren Tieren wird ermöglicht, wenn das zweite Wellenrohr 6 in die aus den **Figuren 5 und 6** ersichtliche Position bewegt wird.

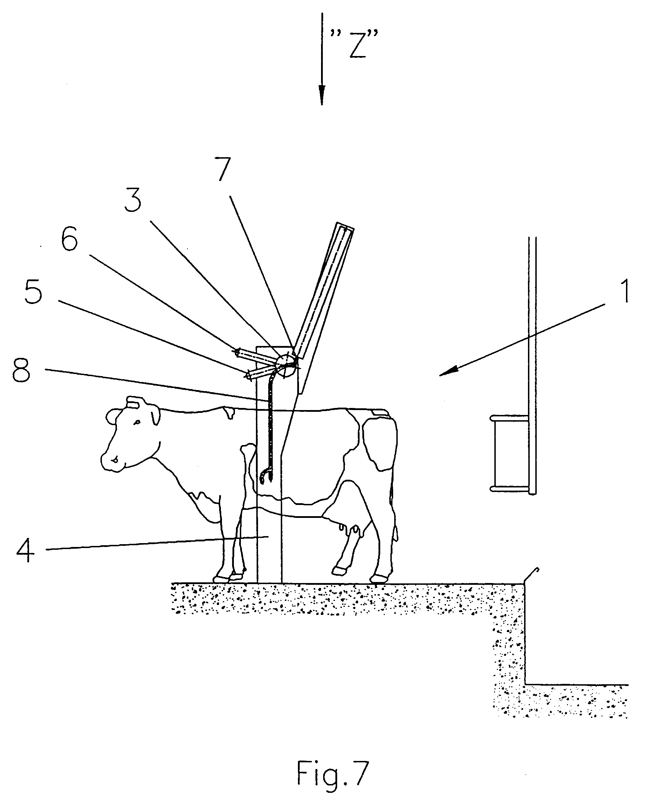

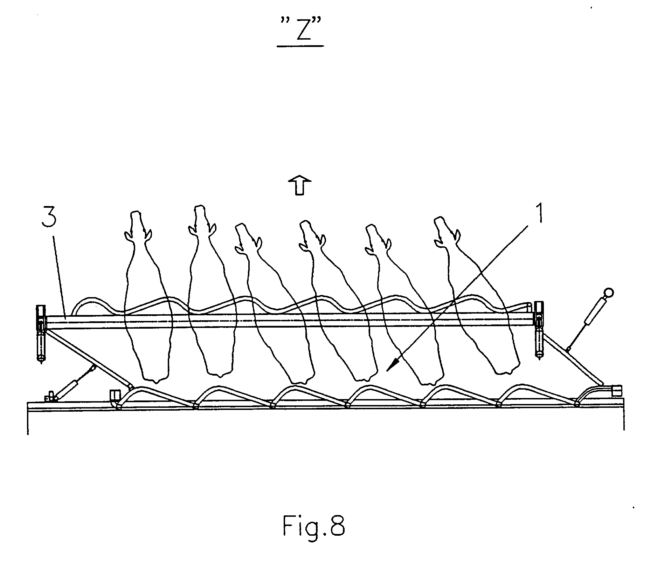

Nach Beendigung des Melkvorganges wird das Sperrelement 3 durch die Kolbenstange 7 in seine obere Position gemäß **Fig. 7** bewegt. Die Führungsbahnen 8 in den Konsolen 4 sind so ausgebildet, daß die Wellenrohre 5 und 6 dabei in eine überwiegend horizontale Lage geschwenkt werden. Die Tiere können jetzt wie aus **Fig. 8** ersichtlich alle gleichzeitig unter dem Sperrelement 3 hinweg aus dem Melkstand 1 austreten und ermöglichen damit eine schnelle Neubelegung. Durch die horizontale Position der Wellenrohre 5 und 6 kann die erforderliche Hubhöhe für das Sperrelement 3 und damit auch die erforderliche Raumhöhe gering gehalten werden.

## Patentansprüche

1. Melkstand (1) mit einer Vielzahl von nebeneinander vorgesehenen Standplätzen zur Aufnahme der zu melkenden Tiere, wobei den Tieren rückseitig eine Begrenzung (2) und brustseitig ein Sperrelement (3) zugeordnet ist, wobei das Sperrelement (3) vertikal bewegbar ist von einer unteren Position, in der es den Austritt der Tiere verhindert, in eine obere Position, in der es den Austritt ermöglicht,
**dadurch gekennzeichnet**, daß das Sperrelement (3) mit einem sich in der Sperrposition im wesentlich horizontal erstreckenden ersten Wellenrohr (5) versehen ist, wobei das Sperrelement (3) um seine Längsachse drehbar und dadurch das erste Wellenrohr (5) aus einer überwiegend vertikalen Position in eine überwiegend horizontale Lage schwenkbar ist.

2. Melkstand nach Anspruch 1, dadurch gekennzeichnet, daß das Sperrelement (3) mit einem zweiten Wellenrohr (6) versehen ist, das zum ersten Wellenrohr (5) versetzt angeordnet und durch Drehung des Sperrelementes (3) in eine überwiegend horizontale Position bringbar ist, wobei die radiale Erstreckung des zweiten Wellenrohres (6) größer ist als die des ersten Wellenrohres (5).

3. Melkstand nach Anspruch 1 oder 2, dadurch gekennzeichnet, daß das Sperrelement (3) an beiden Endseiten in Konsolen (4) gelagert ist und die Betätigung des Sperrelementes (3) durch axial bewegliche Kolbenstangen (7) erfolgt.

4. Melkstand nach Anspruch 3, dadurch gekennzeichnet, daß die Konsolen (4) mit Führungsbahnen (8) für das Sperrelement (3) versehen sind, die bei Betätigung der Kolbenstangen (7) eine vertikale Bewegung des Sperrelementes (3) bewirken und in der oberen und unteren Position eine Drehung des Sperrelementes (3) erzwingen, durch die die Wellenrohre (5, 6) in eine überwiegend horizontale Lage bewegt werden.

## Claims

1. Milking parlour comprising a large number of adjacent milking places for the animals to be milked in, whereby the animals are held at the rear by a restraint and at the front by a locking element which is provided with a first corrugated pipe that is essentially horizontal in the locking position ,
**characterised in that** the locking element (3) can be moved in vertical direction from a lower position, in which it prevents the animals from exiting, to an upper position, that permits the animals to exit, whereby the locking element (3) can be rotated around its longitudinal axis hence enabling the first corrugated pipe (5) to be swung from an essentially vertical position to an essentially horizontal position.

2. Milking parlour according to claim 1, characterised in that the locking element (3) is provided with a second corrugated pipe (6) which is arranged in an offset position relative to the first corrugated pipe (5) and which can be brought into an essentially horizontal position by rotating the locking device (3), whereby the radial span of the second corrugated pipe (6) is larger than that of the first corrugated pipe (5).

3. Milking parlour according to claim 1 or 2, characterised in that the locking element (3) is supported at both ends in consoles (4), and actuation of the locking element (3) is by means of axially moveable piston rods (7).

4. Milking parlour according to claim 3, characterised in that the consoles (4) are provided with guideways (8) for the locking element (3) which, upon actuation of the piston rods (7), effect a vertical movement of the locking element (3) and force rotation of the locking element (3) in the upper and lower position, thereby moving the corrugated pipes (5, 6) into an essentially horizontal position.

## Revendications

1. Salle de traite comportant une multitude de postes de traite juxtaposés, chaque animal à traire étant fixé par une limitation à l'arrière et par un élément de fermeture du côté poitrine, l'élément de fermeture étant pourvu d'un premier tuyau ondulé qui, en position de fermeture, s'étend principalement en sens vertical,
**caractérisée en ce que** l'élément de fermeture (3) peut être déplacé verticalement d'une position finale inférieure dans laquelle il empêche la sortie des animaux, vers une position finale supérieure dans laquelle il permet la sortie des animaux, l'élément de fermeture (3) étant orientable autour de son axe longitudinal de manière à ce que le premier tuyau ondulé (5) pivotera d'une position largement verticale dans une position largement horizontale.

2. Salle de traite selon revendication 1, caractérisée en ce que l'élément de fermeture (3) est pourvu d'un deuxième tuyau ondulé (6) disposé en position légèremetn déplacée par rapport à celle du premier tuyau ondulé (5) et se laissant amener dans une position largement horizontale en tournant l'élément de fermeture (3), l'extension radiale du deuxième tuyau (6) étant supérieure à celle du premier tuyau ondulé (5).

3. Salle de traite selon l'une des revendications 1 ou 2, caractérisée en ce que l'élément de fermeture (3) est logé dans deux consoles (4) disposées à ses extrémités, l'élément de fermeture (3) étant actionné au moyen de tiges de piston (7) coulissant axialement.

4. Salle de traite selon revendication 3, caractérisée en ce que les consoles (4) sont munies de glissières de guidage (8) qui, quand les tiges de piston (7) sont actionnées, dirigent l'élément de fermeture (3) en sens vertical et, dans ses positions finales inférieure et supérieure, provoquent une rotation obligatoire de l'élément de fermeture (3) pour amener les tuyaux ondulés (5, 6) dans une position largement horizontale.
